# EUROPEAN PATENT SPECIFICATION

(11) **EP 2 206 293 B1**
(45) Date of publication and mention of the grant of the patent: **04.03.2015**
(21) Application number: 08804956.4
(22) Date of filing: 01.10.2008
(51) Int. Cl.: H04L 12/437, H04L 12/40

(54) **SYSTEM AND METHOD FOR SIGNAL FAILURE DETECTION IN A RING BUS SYSTEM**
SYSTEM UND VERFAHREN ZUR SIGNALAUSFALLDETEKTION IN EINEM RINGBUSSYSTEM
SYSTÈME ET PROCÉDÉ POUR LA DÉTECTION D'UNE PERTE DE SIGNAL DANS UN SYSTÈME DE BUS EN ANNEAU

(30) Priority: 02.10.2007 EP 07117712
(43) Date of publication of application: 14.07.2010
(73) Proprietor: Microchip Technology Germany GmbH, 82205 Gilching (DE)
(72) Inventor: KERBER, Stefan, 75334 Straubenhardt (DE); WILHELM, Robert, 76275 Ettlingen (DE)
(74) Representative: Lohr, Georg
(86) International application number: PCT/EP2008/063133
(87) International publication number: WO 2009/043868

(56) References cited:
- EP-A- 0 431 635
- WO-A-99/12313
- US-A1- 2006 026 471

## Description

### Field of the invention

The invention relates to a communication system, ports of the communication system and a method for managing a communication system, all based on a ring network of two or more ports coupled preferably in daisy chain fashion to one another to allow communication.

### Description of the related art

A communication system is generally known as a system that permits communication between nodes interconnected by a transmission line. Each node can transmit information and receive information across the transmission line. The communication system of interconnected nodes can be organized in various topologies, such as bus, ring, star, or tree topology or a combination thereof.

A bus topology network is generally regarded as linear. Transmissions from one node propagate along the transmission line and are received by all other nodes connected to that bus. A ring topology network, however, generally consists of a series of nodes connected to one another by unidirectional transmission links to form a single, closed loop. Examples of a ring network further also referred to as ring bus are described in IEEE 802.5, Fiber Distributed Data Interface (FDDI) and the MOST specification.

The transmission line between nodes can be either wired or wireless, for example, copper wire, fiber optic, or wireless transmission medium for the chosen transmission line, respectively.

In ring bus systems failure of a single node leads to failure of the whole network. For fault clearance the failing node must be identified. If the fault can be identified by the controller of the failing node, it may be written into memory for later analysis. This is not possible, if the controller itself or other hardware, which cannot be monitored by the controller, fails. Such hardware may be the optical transmitter of an optical network.

US 5,394,401 discloses a ring network based on a smart wiring concentrator or MAU to which individual network nodes are connected. Failure of a single node is detected by a controller. This solution requires a star wiring scheme from each node to the MAU. Furthermore the MAU requires one network port for each attached node, which makes this solution complex and expensive.

WO 99/12313 A discloses a local communication system and apparatus for use therein. This communication system detects bus failures and transmits a shutdown command to succeeding bus nodes.

US 2006/026471 A1 discloses a loop status monitoring apparatus which identifies failing devices in a network and stores information about these failing devices.

EP 0431635 A discloses a ring type LAN having a fault processing system which activates loop-back circuits for the case a node fault has been detected.

### Summary of the invention

The problem to be solved by the invention is to handle a bus failure in a ring bus system and furthermore identify the failed bus node.

Solutions of the problem are described in the independent claims. The dependent claims relate to further improvements of the invention.

An inventive communication port 11 in a bus node 10 receives data from a ring bus and transmits data on the ring bus. During normal operation mode, the communication port continuously receives data coming over the ring bus. There may be situations, where the signal transmission is interrupted, further referred to as "signal off" status. Such a "signal off" status may be caused by a failure in the bus transmission medium or by a failure in a bus node 40. The communication port 11 can detect a signal off status being caused by a preceding bus node 40 or the transmission medium in between the preceding bus node 40 and the communication port 11. This communication port 11 may have at least one means for detecting a "signal off" status. This may be a signal level detector, a lock detector of an internal PLL, a frame- or CRC- checker on the incoming data stream or any other means for detecting a loss of input signal. A signal off status may be any other condition where the communication between nodes or communication ports is interrupted like a "critical unlock" which is a series of unlock events where a communication ports cannot lock on the data stream of the bus.

When a signal off status has been detected, the communication port 11 notifies all other bus nodes of a failure in the bus between the preceding bus node 40 and the communication port 11. This is done as follows.

For maintaining communication, the communication port is preferably configured as timing master, thus serving as timing reference for any further communication over the bus. Furthermore, the communication port sets the shutdown flag and sends it over the bus. This shutdown flag is a flag which is represented by at least one bit or a plurality of bits in network frames sent over the bus. After setting the shutdown flag, the communication port will wait for a predetermined time, which is necessary to distribute the frames containing the shutdown flag to the communication ports of all other network nodes. This time is typically in a range from 10 ms to 1 s, preferably 100 to 200 ms. As an alternative this time may be zero. Instead of transmitting a shutdown flag in a standard frame, specific frames or specific messages may be sent over the bus. In addition to the aforementioned steps the communication port 11 will save its internal status as "signal off".

It is obvious that the steps of configuring as timing master, setting the shutdown flag and forwarding it, saving the status "signal off", waiting may be exchanged in their order. It is only necessary to configure as timing master before forwarding the shutdown flag. Also the shutdown flag must be set before forwarding it. Waiting should take place after forwarding the shutdown flag. Finally the communication port switches its output signal off. This may be disabling an optical output or setting an electrical output to a predetermined voltage or to a high impedance state. The step of saving the internal status as "signal off" may take place any time.

After the communication port of one node has switched its signal off, the communication port of the succeeding node detects a signal off condition and will proceed with the procedure for the case of a received Shutdown flag. By this way the shutdown process is propagating from node to node through the whole bus system. As a further alternative the shutdown flag may be used to trigger a shutdown of further bus nodes.

In a preferred embodiment, after the communication port 11 has detected a "signal off" status, it checks whether a shutdown flag already has been received from the communication port of another node. If such a shutdown flag has been received, the communication port saves its internal status "no fault saved". Furthermore, the output signal of the communication port is switched off, thus bringing the communication port itself into a safe state. The steps of saving the internal status and switching the output of the communication port off may be exchanged. For the case no shutdown flag has been received, the bus communication port itself has detected a critical situation, where the bus has been interrupted. In that case, the communication port 11 starts with its procedure for the "signal off" status as described above.

In general, the internal status preferably is stored in a non-volatile memory and may be queried after the next restart of the network or power on (starting the node by applying electrical power) of the bus node. The status information "no fault saved" and "signal off" are for distinguishing whether a communication port was or was not the first port after the location where a bus fault occurred. According to the invention such a signaling may be done by similar embodiments like having a default value of "signal off" which is only overwritten, if necessary by "no fault saved" or otherwise.

In another embodiment, for the case the network should be shut down by a network node, called the PowerMaster, the communication port of this PowerMaster sets the shutdown flag to forward the shutdown command to other network nodes. Furthermore, it saves its internal status as "no fault saved". Finally, it waits a predetermined time, which is necessary to forward the frames to the other network nodes and finally switches off its signal at the output. When the next communication port detects this "signal off" status, it will proceed as described above for the case with a received Shutdown Flag by saving its internal status as "no fault saved" und shutting its output off. By that way one communication port shuts down after the other. After such a shutdown triggered by the power master, all communication ports have the status "no fault saved".

According to a further embodiment, in the case of an emergency shutdown, which may be caused by low supply voltage or an over-temperature, the signal at the output is switched off immediately. This causes the succeeding communication port on the bus to detect a "signal off" state and to proceed as explained above by taking over the role as timing master, forwarding the shutdown flag to other network node's communication ports and saving its internal state of "sudden signal off".

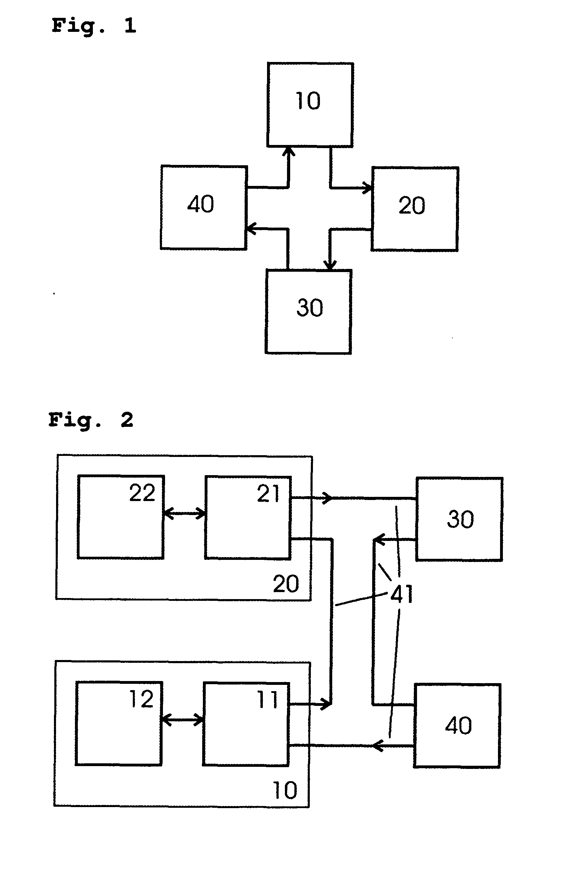

If there is only one failure in a ring bus at a time causing a "signal off" event, according to the invention, the communication port being the next after the location of this event will configure itself as timing master and forward the shutdown flag to the other network node's communication ports. In addition, it will save its internal state of "signal off". Furthermore it will shut down its output signal to trigger the "signal off" event at succeeding node's communication ports. These communication ports shut down by saving the status "no fault saved", as they previously have received the shutdown flag. This results in a safe network status with all the bus nodes being shut down after some predetermined time. When the bus is restarted or powered on again, any node, specifically a network analyzer may read the status of the communication ports of the network nodes. Only one of the communication ports will have the internal status "signal off", while all the other communication ports have the internal status "no fault saved". Accordingly, this one communication port, which was succeeding the location of the "signal off" event, e. g. if this event occurred in node 10 of Fig. 2 or in the line between nodes 10 and 20, the node with internal status "signal off" would be node 20. Therefore, according to the invention, an easy identification of the location of a "signal off" event is possible. In addition, other data relevant to the event may be recorded by the network node or its communication port.

In a further embodiment the invention comprises a communication port 11 which is configured to generate frames comprising at least
- a preamble for marking the beginning of a frame,
- a Shutdown Flag field,
- an optional data field.

The frames comprise a predetermined number of bits. Preferably the number of bits per frame is constant. The data field may be omitted. Furthermore the communication port 11 is configured to receive data from the communication line. This communication port 11 has a frame buffer and decoder for storing frames and for disassembling the frames or at least parts thereof. When receiving data the communication port 11 may first synchronize on a preamble, if available. The communication port 11 preferably can analyze at least parts of these frames for reading the Shutdown Flag field.

Preferably transmitting and receiving of the shutdown-flag is done by the physical layer (according to the ISO model) of the communication port.

Another aspect of the invention is a network node 10 comprising at least one of the previously disclosed communication ports 11.

A further aspect of the invention is a method for shutting down a communication port of a network node, a network node or even a whole network. The method comprises the following steps:
A1) detecting a "signal off" condition, which may be a failure of input signal, and proceeding with the following steps only if a signal off condition has been detected.
A2) configuring a communication port as timing master,
A3) setting the shutdown flag and forwarding the shutdown flag over the network,
A4) waiting a predetermined time and
A5) switching the output signal off.
and at any time after step A1, saving the status "signal off".

Preferably checking, whether there is a shutdown flag present, is done after a signal off event has been detected (step A1). If a shutdown flag is present, processing is continued with step A5. It is obvious that the steps A2, A3, and A4 may be exchanged in their order. It is only necessary to have step A2 before forwarding the shutdown flag. Also the shutdown flag must be set before forwarding it. A4 should take place after forwarding the shutdown flag.

A further embodiment of the method comprises the steps of
A6) saving the internal status "no fault saved" and
A7) switching the output signal off.
instead of the steps A2 to A5, for the case there has a shutdown flag been received. The order of A6 and A7 may be reversed.

A further embodiment of the method to be performed by a PowerMaster communication port, comprises the steps of
B1) setting the shutdown flag and forwarding the shutdown flag over the network,
B2) waiting a predetermined time and
B3) switching the output signal off,
and saving the status "no fault saved" anytime.
A communication port having the function of the PowerMaster starts to shut down the network by that sequence. A PowerMaster device is a network node, which controls the power status (power on, power off, idle ...) of network nodes, preferably of the whole network. In this case the nodes following the PowerMaster will detect a "signal off" and receive the shutdown flag therefore proceed with steps A1, A6 and A7.

In another embodiment, for the case an emergency shutdown has to be performed, the signal of the communication port is immediately switched off. This causes the succeeding node's communication port to detect a "signal off" condition and proceed according to steps A1 to A6. The communication ports of nodes succeeding that node will then further detect a "signal off" and receive the shutdown flag and therefore proceed with steps A1, A6 and A7.

For clarity reasons reference is made to bus nodes and to communication ports. Each bus node contains at least one communication port.

Although this invention may be applied to various types of bus systems, the preferred type of bus is an optical ring bus. Here, specifically failures of the optical transmitter of a communication port can be detected.

### Description of Drawings

In the following the invention will be described by way of example, without limitation of the general inventive concept, on examples of embodiment with reference to the drawings.
Figure 1 shows a ring network comprising four network nodes.
Figure 2 shows a ring bus where the network nodes 10 and 20 are shown in more detail.
Figure 3 shows a flowchart of the function of a communication port.

Fig. 1 shows a ring network comprising four network nodes. A first network node 10, a second network node 20, a third network node 30 and a fourth network node 40 are connected together to form a ring bus. Data is transferred in the direction of the arrows from first network node 10 to second network node 20 over third network node 30 and fourth network node 40 back to first network node 10.

Fig. 2 shows a ring bus as in Fig. 1, where the network nodes 10 and 20 are shown in more detail. The first and second network nodes 10 and 20 comprise a communication port 11 and 21 which receives data from the network and sends data on the network. Furthermore, the communication ports 11, 21 exchanges data with the application 12, 22 of the network node. All network nodes are connected via the data bus lines 41.

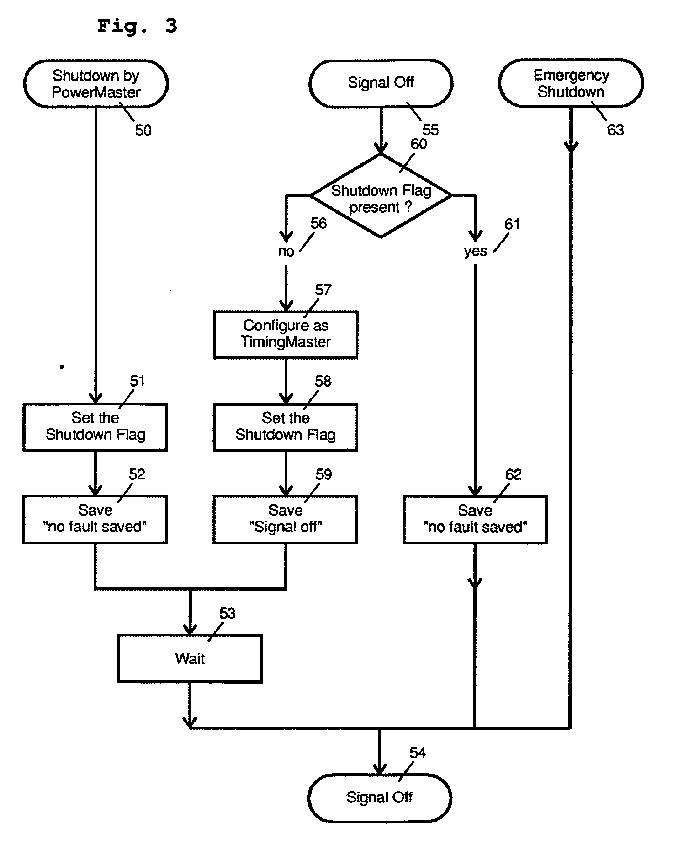

Fig. 3 shows a flowchart of the function of a communication port.

When the PowerMaster shuts down the network (step 50), it sets the shutdown flag (step 51), which is forwarded via the network to other network nodes and saves the internal status "no fault saved" (step 52). Finally, it waits (step 53) a predetermined time and after that it shuts its own signal off (step 54). This means, no more data are transmitted over the bus.

For the case a "signal off" (step 55) condition is detected which may arise from a missing input signal into the input of the communication port, the communication port checks whether a shutdown flag is present. A shutdown flag would be present if it had previously been received over the network and preferably had been stored in the communication port. If no shutdown flag is present (step 56), then obviously the "signal off" condition has occurred immediately before the communication port. Accordingly, it gets configured as timing master (step 57) being the bus clock timing reference for the whole bus. After that, it sets the shutdown flag (step 58), which is forwarded over the bus to other network nodes. In the next step, it saves its internal state "signal off" (step 59) and waits (step 53) a predetermined time until it switches off (step 54) its signal.

For the case after the "signal off" detection (step 55) a shutdown flag was present (step 61), it saves its internal state "no fault saved" (step 62) and switches its signal off (step 54).

In case of an emergency shutdown (step 63), it immediately switches off its signal (step 54).

### List of reference numerals

- 10: first network node
- 11: communication port
- 12: application
- 20: second network node
- 21: communication port
- 22: application
- 30: third network node
- 40: fourth network node
- 41: transmission medium
- 50-63: process steps as labeled in fig. 3

## Claims

1. A communication port (11) for a bus node (10) for a ring bus, having an input for receiving data and an output for transmitting data, and having means for detecting a signal off condition at the input,
**characterized by**
being configured for, after a signal off condition has been detected, checking whether a shutdown flag has been received and
in case of no received shutdown flag saving its internal status "signal off" and for performing the steps of
- configuring itself as timing master for the bus,
- setting a shutdown flag which is forwarded over the bus to other bus nodes (20, 30, 40),
- waiting a predetermined time,
- switching the output signal off, and
in case of a received shutdown flag performing the steps of
- saving its internal status "no fault saved",
- switching the output signal off.

2. The communication port (11) according to any one of the preceding claims,
**characterized by**
being configured for saving its internal status "no fault saved" and for performing the steps of
- setting a shutdown flag which is forwarded over the bus to other bus nodes (20, 30, 40),
- waiting a predetermined time and
- switching the output signal off
in the case a remote shutdown command has been received.

3. The communication port (11) according to any one of the preceding claims,
**characterized by**
being configured for switching the output signal off in the case an emergency shutdown has to be performed.

4. The communication port (11) according to any one of the preceding claims,
**characterized by**
being configured to generate and at least partly analyze frames comprising at least
- a preamble for marking the beginning of a frame, and
- a Shutdown Flag field.

5. A bus node (10) comprising a communication port (11) according to any one of the preceding claims.

6. Method for shutting down a communication port of a network node, comprising the steps of
A0) detecting a "signal off" event (55),
A1) checking whether there is a shutdown flag present (60), and
for the case there is no shutdown flag present (56),
A2) configuring a communication port as timing master (57),
A3) setting the shutdown flag and forwarding the shutdown flag over the network (58),
A4) waiting a predetermined time (53) and
A5) switching the output signal off (54)
and at any time after step A1, saving its internal status "signal off" (59), and
if there is a shutdown flag present (61),
A6) saving the internal status "no fault saved" (62) and
A7) switching the output signal off (54).

7. Method according to claim 6, comprising the steps of
B1) setting the shutdown flag and forwarding the shutdown flag over the network (51),
B2) waiting a predetermined time (53) and
B3) switching the output signal off (54).
instead of the steps A0 to A7 and saving the status "no fault saved" (52) in the case a remote shutdown command has been received (50).

## Patentansprüche

1. Ein Kommunikationsanschluss (11) für einen Busknoten (10) für einen Ringbus, mit einem Eingang zum Empfangen von Daten und einem Ausgang zum Übertragen von Daten, und mit Mitteln zum Erfassen eines Signal-Aus-Zustand am Eingang,
**dadurch gekennzeichnet dass**
der Kommunikationsanschluss konfiguriert ist zum, nachdem ein Signal-Aus-Zustand ermittelt worden ist, Überprüfen ob ein Abschalt-Flag empfangen worden ist, und falls kein Abschalt-Flag empfangen worden ist, Sichern seines internen Status "Signal aus" und Ausführen der Schritte
- sich als Timing Master für den Bus konfigurieren,
- Setzen eines Abschalt-Flags, die über den Bus zu anderen Busknoten weitergeleitet wird (20, 30, 40),
- Warten für eine vorbestimmte Zeit,
- Abschalten des Ausgangssignals, und
falls ein Abschalt-Flag empfangen wurde, Ausführen der Schritte
- seinen internen Status "kein Fehler gesichert" sichern,
- Abschalten des Ausgangssignals.

2. Der Kommunikationsanschluss (11) nach einem der vorhergehenden Ansprüche,
**dadurch gekennzeichnet dass**
der Kommunikationsanschluss dazu konfiguriert ist, seinen internen Status "kein Fehler gesichert" zu sichern, und um die Schritte auszuführen
- Setzen eines Abschalt-Flags, die über den Bus zu anderen Busknoten weitergeleitet wird (20, 30, 40),
- Warten für eine vorbestimmte Zeit,
- Abschalten des Ausgangssignals
falls ein Abschalt-Fernbefehl empfangen wurde.

3. Der Kommunikationsanschluss (11) nach einem der vorhergehenden Ansprüche,
**dadurch gekennzeichnet dass**
der Kommunikationsanschluss dazu konfiguriert ist, das Ausgangssignal abzuschalten, falls eine Notabschaltung ausgeführt worden ist.

4. Der Kommunikationsanschluss (11) nach einem der vorhergehenden Ansprüche,
**dadurch gekennzeichnet dass**
der Kommunikationsanschluss dazu konfiguriert ist, Frames zu erzeugen und zumindest teilweise zu analysieren, welche zumindest umfassen
- eine Präambel, um den Beginn des Frames zu markieren, und
- ein Abschalt-Flag-Feld.

5. Ein Busknoten (10) umfassend einen Kommunikationsanschluss (11) nach einem der vorhergehenden Ansprüche.

6. Verfahren zum Abschalten eines Kommunikationsanschlusses für einen Netzwerkknoten, umfassend die Schritte:
A0) Erfassen eines "Signal-aus"-Ereignisses (55),
A1) Überprüfen, ob ein Abschalt-Flag vorhanden (60), und
falls kein Abschalt-Flag vorhanden ist (56),
A2) Konfigurieren eines Kommunikationsanschlusses als Timing Master (57),
A3) Setzen des Abschalt-Flags und Weiterleiten des Abschalt-Flags über das Netzwerk (58),
A4) Warten für eine vorbestimmte Zeit (53) und
A5) Abschalten des Ausgangssignals (54)
und jederzeit nach Schritt A1 Sichern seines internen Status "Signal aus" (59), und falls ein Abschalt-Flag vorhanden ist (61),
A6) Sichern des internen Status "kein Fehler gesichert" (62) und
A7) Abschalten des Ausgangssignals (54).

7. Verfahren nach Anspruch 6, umfassend die Schritte
B1) Setzen des Abschalt-Flags und Weiterleiten des Abschalt-Flags über das Netzwerk (51),
B2) Warten für eine vorbestimmte Zeit (53) und
B2) Abschalten des Ausgangssignals (54)
anstatt der Schritte A0 bis A7 und Sichern des Status "kein Fehler gesichert" (52) falls ein Abschalt-Fernbefehl empfangen worden ist (50).

## Revendications

1. Un port de communication (11) pour un noeud de bus (10) pour un bus en anneau, ayant une entrée pour recevoir des données et une sortie pour transmettre des données, et ayant un moyen pour détecter une condition hors tension d'un signal à l'entrée, **caractérisé par** Le fait d'être configuré pour, après qu'une condition hors tension d'un signal ait été détectée, vérifier si un drapeau d'arrêt a été reçu et
Si un drapeau d'arrêt n'a pas été reçu, pour conserver son statut interne de « signal hors tension » et pour réaliser les étapes de
- configuration propre en tant que maître de synchronisation pour le bus,
- établissement d'un drapeau d'arrêt qui est envoyé sur le bus à d'autres noeuds de bus (20, 30, 40),
- attente d'une durée prédéterminée,
- mise hors tension du signal de sortie, et
Si un drapeau d'arrêt a été reçu, la réalisation des étapes de
- enregistrement de son statut interne « aucun défaut enregistré »,
- mise hors tension du signal de sortie.

2. Le port de communication (11) selon l'une des revendications précédentes,
**Caractérisé par**
Le fait d'être configuré pour enregistrer son statut interne « aucun défaut enregistré » et pour réaliser les étapes de
- établissement d'un drapeau d'arrêt qui est envoyé sur le bus à d'autres noeuds de bus (20, 30, 40),
- attente d'une durée prédéterminée et
- mise hors tension du signal de sortie
Au cas où une commande d'arrêt à distance aurait été reçue.

3. Le port de communication (11) selon l'une des revendications précédentes,
**Caractérisé par**
Le fait d'être configuré pour mettre hors tension le signal de sortie au cas où un arrêt d'urgence devrait être effectué.

4. Le port de communication (11) selon l'une des revendications précédentes,
**Caractérisé par**
Le fait d'être configuré pour générer et au moins partiellement analyser des cadres comprenant au moins
- un préambule pour marquer le début d'un cadre, et
- un champ de drapeau d'arrêt.

5. Un noeud de bus (10) comprenant au port de communication (11) selon l'une des revendications précédentes.

6. Une méthode pour arrêter un port de communication d'un noeud de réseau, comprenant les étapes de
A0) détection d'un événement de « mise hors tension de signal » (55),
A1) vérification s'il existe un drapeau d'arrêt présent (60), et
Au cas où il n'y aurait pas de drapeau d'arrêt présent (56),
A2) configuration d'un port de communication en tant que maître de synchronisation (57),
A3) établissement du drapeau d'arrêt et envoi du drapeau d'arrêt sur le réseau (58),
A4) attente d'une durée prédéterminée (53) et
A5) mise hors tension du signal de sortie (54)
Et à tout moment après l'étape A1, enregistrement de son statut interne de « mise hors tension » (59), et
S'il y a un drapeau d'arrêt présent (61),
A6) enregistrement du statut interne « aucun défaut enregistré » (62) et
A7) mise hors tension du signal de sortie (54).

7. Méthode selon la revendication 6, comprenant les étapes de
B1) établissement du drapeau d'arrêt et envoi du drapeau d'arrêt sur le réseau (51),
B2) attente d'une durée prédéterminée (53) et
B3) mise hors tension du signal d'entrée (54).
Au lieu des étapes A0 à A7 et d'enregistrement du statut « aucun défaut enregistré » (52) au cas où une commande d'arrêt à distance aurait été reçue (50).
